# EUROPÄISCHE PATENTSCHRIFT

(11) **EP 2 734 462 B1**
(45) Veröffentlichungstag und Bekanntmachung des Hinweises auf die Patenterteilung: **20.03.2019**
(21) Anmeldenummer: 12737560.8
(22) Anmeldetag: 19.07.2012
(51) Int. Cl.: B65G 47/22, B65G 47/88, B21D 43/26, B65H 9/06

(54) **VORRICHTUNG UND VERFAHREN ZUM STOPPEN UND/ODER AUSRICHTEN VON TRANSPORTGÜTERN AUF EINER FÖRDEREINRICHTUNG UND FÖRDEREINRICHTUNG**
DEVICE AND METHOD FOR STOPPING AND/OR ALIGNING TRANSPORT GOODS ON A CONVEYING DEVICE, AND CONVEYING DEVICE
DISPOSITIF ET PROCÉDÉ PERMETTANT D'ARRÊTER ET/OU D'ORIENTER DES PRODUITS TRANSPORTÉS SUR UN CONVOYEUR, ET CONVOYEUR

(30) Priorität: 21.07.2011 DE 102011108063; 26.08.2011 DE 102011111279
(43) Veröffentlichungstag der Anmeldung: 28.05.2014
(73) Patentinhaber: ThyssenKrupp System Engineering GmbH, 74076 Heilbronn (DE)
(72) Erfinder: DÖRR, Hardy, 66589 Merchweiler (DE)
(74) Vertreter: Loock, Jan Pieter
(86) Internationale Anmeldenummer: PCT/EP2012/064236
(87) Internationale Veröffentlichungsnummer: WO 2013/011107

(56) Entgegenhaltungen:
- WO-A1-2009/113160
- CA-A1- 2 465 986
- US-A- 5 070 992

## Beschreibung

### Stand der Technik

Die vorliegende Erfindung geht aus von einer Vorrichtung gemäß dem Oberbegriff des Anspruchs 1.

Es ist allgemein bekannt, Rollenförderer mit Stoppeinrichtungen zu versehen, um mittels des Rollenförderers transportierte Transportgüter zu stoppen und/oder in gewünschter Weise auszurichten. Beispielsweise ist aus der Druckschrift DE 202 07 436 U1 ein Rollenförderer mit einer zwischen zwei Rollen angeordneten Stoppeinrichtung bekannt, bei welcher die Stoppeinrichtung ein um eine Achse drehbares Stoppelement umfasst, welches mittels eines Motors in den Förderweg des Rollenförderers geschwenkt wird. Aus der Druckschrift US 5 070 992 A ist ein Fördersystem für Behälter mit einer Vorrichtung nach dem Oberbegriff des Anspruchs 1 bekannt, bei dem Ausrichtungsstifte die durch Förderbänder beförderten Behälter stoppen.

Solche Rollenförderer mit Stoppeinrichtungen werden beispielsweise in Fertigungsstraßen zur industriellen Herstellung und Verarbeitung von Karosseriebauteilen verwendet. Für den Prozess des Warmumformens von Blechteilen in Pressen, insbesondere Karosserieblechteilen der Automobilindustrie, werden üblicherweise Glühöfen zum Erwärmen der umzuformenden Teile auf Umformtemperatur eingesetzt. Prinzipiell sind solche Öfen in drei Bereiche unterteilt: Aufgabestrecke, Aufheizstrecke mit eventueller Temperaturhaltestrecke und Auslaufstrecke. Der Transport der Teile durch den Ofen erfolgt auf den genannten Rollenförderern. Zum Weitertransport der Teile in die Umformpresse, z.B. durch handelsübliche Industrieroboter mit Greifeinrichtungen, müssen die Karosseriebauteile im Bereich der Auslaufstrecke in Längs- und Querrichtung zur Förderrichtung positioniert werden. Hierzu sind bislang Einrichtungen mit Stopperfunktion im Bereich der Auslaufstrecke bekannt, bei denen einzelne, pneumatisch angetriebene Stoppzylinder mit Anschlägen bestückt zwischen den Rollen der Auslaufstrecke in Richtung Förderweg geschwenkt oder linear verfahren werden und an mehreren geeigneten Stellen die ankommenden Produktionsteile abfangen. Das Ausrichten der Produktionsteile quer zur Förderrichtung erfordert eine weitere Hub- oder Schwenkbewegung, z.B. durch pneumatische Schwenkspanner, die als Schieber eingesetzt werden.

Die bei mehreren Produktionsteilen erforderliche, nacheinander folgende zeitliche Ansteuerung der Stopper wird beispielsweise durch optische Sensoren zur Produktionsteilerkennung realisiert. Hierbei werden die in Förderrichtung der Produktionsteile zuvorderst angeordneten Stopper zunächst nicht angesteuert, so dass diese das erste Produktionsteil passieren lassen, wobei anschließend die Stopper zwischen diesem ersten Produktionsteil und dem nachfolgenden Produktionsteil hochgefahren werden, um das nachfolgende Produktionsteil zu stoppen, während dessen das erste Produktionsteil an seinen eigenen dahinter liegenden Stoppern anschlägt. Die Stellungskontrolle der Stopper erfolgt beispielsweise induktiv.

### Offenbarung der Erfindung

Es ist eine Aufgabe der vorliegenden Erfindung eine Vorrichtung zum Stoppen und/oder Ausrichten von Transportgütern auf einer Fördereinrichtung bereitzustellen, welche im Vergleich zum Stand der Technik einfacher aufgebaut und somit kostengünstiger herstellbar ist und welche darüber hinaus eine flexible Anpassung an die Förderbegebenheiten, sowie an die gewünschten Stopp- bzw. Positionierungsanforderungen ermöglicht. Zudem soll in einfacher Weise eine flexible Anpassung an die Geometrie der Transportgüter ermöglicht werden.

Gelöst wird diese Aufgabe mit einer Vorrichtung gemäß Anspruch 1.

Die erfindungsgemäße Vorrichtung hat gegenüber dem Stand der Technik den Vorteil, dass die Vorrichtung wesentlich einfacher und kompakter ausgebildet ist, sowie kostengünstiger herstellbar ist. Dies wird dadurch erreicht, dass die Anschlagsmittel mittels der gemeinsamen Aktuatoreinrichtung simultan zwischen der Ruheposition und der Arbeitsposition bewegbar sind. Im Gegensatz zum Stand der Technik wird somit nicht für jede Stoppeinrichtung ein separater Einzelantrieb benötigt, wodurch einerseits die Herstellungskosten der Vorrichtung gesenkt werden und andererseits eine komplizierte zeitabhängige Einzelansteuerung der verschiedenen Einzelantriebe vollständig eingespart werden kann. Vielmehr wird eine Mehrzahl von Anschlagsmitteln von der gemeinsamen Aktuatoreinrichtung durch eine gemeinsame Antriebsbewegung der Aktuatoreinrichtung gleichzeitig in Richtung ihrer Arbeitsposition bewegt. Die Vorrichtung ist vorzugsweise in eine Fördereinrichtung integriert. Alternativ ist denkbar, dass die Vorrichtung zum Nachrüsten einer Fördervorrichtung an einer bestehenden und konventionellen Fördereinrichtung montierbar ist oder alleinstehen, beispielsweise unter eine Fördereinrichtung, montiert wird. Durch die Aufnahme der Anschlagsmittel in Löchern der Lochplatte werden die Anschlagsmittel gegenüber mechanischen Kräften, die parallel zur Förderebene auf die Anschlagsmittel einwirken (hervorgerufen durch die gegen die Anschlagsmittel stoßenden Transportgüter), vergleichsweise stark fixiert. Insbesondere ist eine ungewollte und durch Überbelastung hervorgerufene Bewegung der Anschlagsmittel von der Arbeitsposition in die Ruheposition, anders als bei den aus dem Stand der Technik bekannten schwenkbaren Anschlagsmitteln, nicht möglich. Der Grundkörper ist entlang einer zur Förderebene senkrechten Richtung vorzugsweise im Wesentlichen zwischen der Aktuatoreinrichtung und der Förderebene angeordnet. Die Verwendung einer separaten Aktuatoreinrichtung hat den Vorteil, dass ein individuell auf das zu transportierende Transportgut angepasster Aktuator verwendet werden kann, ohne dass zur Anpassung an das Transportgut die gesamte Einheit aus Grundplatte und Anschlagsmitteln verändert werden muss. Insbesondere kann die Aktuatoreinrichtung bzw. die weitere Lochplatte der Aktuatoreinheit einfach ausgetauscht werden, wobei die Anschlagseinheit unverändert bleibt.

Vorteilhafte Ausgestaltungen und Weiterbildungen der Erfindung sind den Unteransprüchen, sowie der Beschreibung unter Bezugnahme auf die Zeichnungen entnehmbar. Erfindungsgemäß ist vorgesehen, dass die Anschlagsmittel senkrecht zu einer Förderebene der Fördereinrichtung zwischen der Arbeitsposition und der Ruheposition translatorisch bewegbar sind, so dass im Gegensatz zum Stand der Technik hierfür keine Schwenkbewegung erforderlich ist. In vorteilhafter Weise weist die Bewegung der Stoppeinrichtung hierdurch keine Bewegungskomponenten entlang der Förderrichtung auf, so dass eine vergleichsweise stabile und präzise Positionierung der Stoppeinrichtung in der Förderebene erzielbar ist. Auch bei großen Fördergeschwindigkeiten und vergleichsweise schwere Transportgütern wird somit ein zuverlässiges und stabiles Aufstoppen bzw. Positionieren der Transportgüter gewährleistet, da die Anschlagsmittel entlang des Förderweges stets ortsfest und mechanisch fixiert bleiben.

Gemäß einer bevorzugten Ausführungsform der vorliegenden Erfindung ist vorgesehen, dass die Vielzahl von Stiftelementen in einer zur Förderebene parallelen Ebene in einem im Wesentlichen gleichmäßig verteilten Punktraster angeordnet sind. In vorteilhafter Weise ist die Vorrichtung aufgrund der Vielzahl von gleichmäßig angeordneten Anschlagsmitteln an jede beliebige Transportgutform oder -größe, sowie an beliebige Ausrichtungsparameter anpassbar. Aufgrund einer entsprechenden Konfigurierung der Vorrichtung wird jedoch jeweils nur ein Teil der Anschlagsmittel durch die Aktuatoreinrichtung von der Ruheposition in die Arbeitsposition verfahren, während die nicht benötigten Anschlagsmittel in dieser Konfiguration stets in der Ruheposition verbleiben. Auf diese Weise ist die Vorrichtung äußerst flexibel und vielseitig an unterschiedliche Geometrien und Dimensionen von Transportgütern anpassbar. Die Anschlagsmittel sind vorzugsweise in Form eines Nagelbettes aufgebaut, wobei lediglich diejenigen Anschlagsmittel in die Arbeitsposition verfahren werden, welche für die aktuelle Anwendung gebraucht werden.

Gemäß einer bevorzugten Ausführungsform der vorliegenden Erfindung ist vorgesehen, dass die Anschlagsmittel in Richtung ihrer jeweiligen Ruheposition elastisch vorgespannt sind. In vorteilhafter Weise ist zum Betrieb der Vorrichtung lediglich ein gemeinsames Mittel notwendig, welches in flexibler Art und Weise immer nur die in der aktuellen Konfiguration benötigten Anschlagsmittel in die Arbeitsposition verfährt. Eine separate Einzelansteuerung der Anschlagsmittel ist somit nicht erforderlich. Ferner ist bevorzugt vorgesehen, dass die Stiftelemente jeweils in eine Hülse eingekapselt sind und innerhalb der Hülse axialverschiebbar gelagert sind. Die Hülse ist dann im Loch der Lochplatte befestigt und das Stiftelement innerhalb der Hülse in die Ruheposition federelastisch vorgespannt. Die Feder ist zwischen der Hülsenwandung und dem Stiftelement angeordnet. Erfindungsgemäß ist vorgesehen, dass die Aktuatoreinrichtung eine Mehrzahl von Stößeln aufweist, welche zum Bewegen der Stiftelemente senkrecht zur Förderebene translatorisch bewegbar sind. In vorteilhafter Weise ist somit eine Auslenkung der Anschlagsmittel in die Arbeitsposition möglich, ohne dass zwangsläufig auch benachbarte Anschlagsmittel in die Arbeitsposition verschoben werden.

Gemäß einer bevorzugten Ausführungsform der vorliegenden Erfindung ist vorgesehen, dass die Aktuatoreinrichtung wenigstens eine oder eine Mehrzahl als Matrix ausgebildete weitere Lochplatten umfasst, an welchen die Stößel befestigt sind und wobei die Lochplatten mittels eines Antriebsmittels gleichzeitig oder in Gruppen in Richtung der Förderebene bewegbar sind. Die Stößel sind vorzugsweise mittels einer kraft- und formschlüssigen Verbindung lösbar an der Lochmatrix bzw. weiteren Lochplatten befestigt. Beispielsweise ist denkbar, dass die Stößel mittels einer Schraub- oder Bajonettverbindung in entsprechenden Löchern der weiteren Lochplatten befestigt sind. Zur Umkonfiguration der Vorrichtung sind somit lediglich ein Lösen der Stößel von den weiteren Lochplatten und gegebenenfalls ein entsprechendes Anbringen der Stößel in anderen Löchern der weiteren Lochplatten notwendig. Alternativ ist auch denkbar, dass einfach die weitere Lochplatte ausgetauscht und durch eine andere weitere Lochplatte, welche bereits ein spezifisch auf das zu transportierende Transportgut angepasstes Raster von Stößeln aufweist, ersetzt wird. Denkbar ist auch, dass die weitere Lochplatte entsprechend versetzt wird, beispielsweise in festgelegten Zwischenrastern. Die weiteren Lochplatten weisen vorzugsweise eine Mehrzahl von Löchern auf, welche in einem Muster angeordnet sind, welches entlang einer zur Förderebene senkrechten Richtung im Wesentlichen deckungsgleich zum Punktraster der Anschlagsmittel ist. Durch eine Anordnung der Stößel in entsprechenden Löchern ist somit eine beliebige Kombination von Anschlagsmitteln durch Bewegen der Lochplatte aktivierbar. Insbesondere ist die Vorrichtung ohne einen Austausch von Anschlagsmitteln und allein durch ein Versetzen der Stößel auf den weiteren Lochplatten bzw. ein Austausch der Lochplatten produktspezifisch oder Versetzen der Lochplatten in festgelegten Zwischenrastern an unterschiedliche Förderbegebenheiten oder Transportgütergeometrien adaptierbar.

Gemäß einer bevorzugten Ausführungsform der vorliegenden Erfindung ist vorgesehen, dass die Stößel hinsichtlich ihrer Position in einer zur Förderebene parallelen Ebene und/oder hinsichtlich ihrer Relativposition senkrecht zur Förderebene frei konfigurierbar an den weiteren Lochplatten befestigt sind. Die Vorrichtung ist vorzugsweise derart ausgebildet, dass durch ein entsprechendes Versetzen der Stößel relativ zu weiteren Lochplatten bzw. ein Austausch der Lochplatten produktspezifisch oder Versetzen der Lochplatten in festgelegten Zwischenrastern eine beliebige Konfiguration von Anschlagsmittel durch die gemeinsame Aktuatoreinrichtung zwischen der Ruheposition und der Arbeitsposition verfahrbar sind.

Gemäß einer bevorzugten Ausführungsform der vorliegenden Erfindung ist vorgesehen, dass das Antriebsmittel einen Nocken umfasst, welcher um eine sich parallel zur Förderebene erstreckende Drehachse drehbar ist. Vorzugsweise wird mittels des Nockens die weiteren Lochplatten in Richtung der Förderfläche bewegt, so dass die entsprechend an den weiteren Lochplatten befestigten Stößel sich ebenfalls in Richtung der Förderfläche bewegen und somit die zu den Stößeln senkrecht zur Förderebene jeweils deckungsgleich angeordneten Anschlagsmittel in ihre Arbeitsposition verschoben werden. Ein Zurückdrehen oder Weiterdrehen des Nockens bewirkt, dass sich die Anschlagsmittel aufgrund ihrer Federbelastung automatisch zurück in ihre Ruheposition bewegen.

Gemäß einer bevorzugten Ausführungsform der vorliegenden Erfindung ist vorgesehen, dass der Nocken einen Umfang mit unterschiedlichen Kurvensteigerungen aufweist, wobei die unterschiedlichen Kurvensteigungen besonders bevorzugt zur Steuerung der Stößel mit unterschiedlichen Geschwindigkeiten vorgesehen sind. Vorteilhafterweise ist es möglich durch unterschiedliche Kurvensteigungen am Umfang des Nockens die Geschwindigkeiten beim Hochfahren der Stößel bei konstanter Antriebsdrehzahl zu steuern und somit beim Betätigen der Anschlagmittel unterschiedliche Ausfahrzeiten der Anschlagmittel zu realisieren. Somit kann in vorteilhafter Weise beispielsweise auf Änderungen im Abstand zwischen den Transportgütern reagiert werden.

Erfindungsgemäß ist vorgesehen, dass der die Anschlagsmittel haltende Grundkörper zusammen mit den Anschlagsmitteln eine Anschlagseinheit bildet, wobei die Aktuatoreinrichtung zusammen mit den Stößeln eine von der Anschlagseinheit separierte Aktuatoreinheit bildet, wobei die Anschlagseinheit und die Aktuatoreinheit voneinander unabhängig und modular austauschbar sind. In vorteilhafter Weise kann somit die Anschlagseinheit mit unterschiedlichen Aktuatoreinheiten betrieben werden, wodurch vorteilhafterweise eine besonders flexible und schnelle Anpassung der Vorrichtung an unterschiedliche Transportgüter erfolgen kann. Zur Anpassung der Vorrichtung muss lediglich die das Stößelmuster aufweisende weitere Lochplatte der Aktuatoreinheit umkonfiguriert oder getauscht werden. Vorzugsweise ist zum Austauschen der weiteren Lochplatte, welche mit einer individuellen Konfiguration von Stößeln bestückt ist, die Aktuatoreinheit parallel zur Förderebene schubladenartig aus der Vorrichtung ausziehbar.

Gemäß einer weiteren bevorzugten Ausführungsform ist vorgesehen, dass zum Ausrichten eines Transportgutes in der Förderebene wenigstens ein Anschlagsmittel entlang einer zur Förderrichtung senkrechten und zur Förderebene parallelen Querrichtung bewegbar ist. In vorteilhafter Weise wird somit eine Bewegung der Anschlagsmittel senkrecht zur Förderrichtung ermöglicht, wodurch die geförderten Transportgüter in der Förderebene beispielsweise ausgerichtet, gedreht oder seitlich verschoben werden können.

Gemäß einer weiteren bevorzugten Ausführungsform ist vorgesehen, dass der Grundkörper wenigstens ein sich entlang der Querrichtung erstreckendes Verschiebemittel aufweist, welches in einer Führung des Grundkörpers entlang der Querrichtung beweglich geführt ist, wobei das wenigstens eine Anschlagsmittel am Verschiebemittel befestigt ist. In vorteilhafter Weise werden durch ein Verschieben des Verschiebemittels, sämtliche an dem Verschiebemittel befestigte Anschlagsmittel gemeinsam entlang der Querrichtung bewegt. Denkbar ist, dass sich die Anschlagsmittel in einer Grundstellung in das Raster der übrigen auf benachbarten Grundkörpern angeordneten Anschlagsmittel einfügen. Das Verschiebemittel umfasst insbesondere eine sich entlang der Querrichtung erstreckende und verschiebbare Aufnahmeleiste für die Anschlagsmittel, wobei die Anschlagsmittel entlang der zur Förderebene senkrechten Richtung axial verschiebbar in Aufnahmelöchern der Aufnahmeleiste aufgenommen sind und somit durch die separate Aktuierungseinrichtung von der Ruheposition in die Arbeitsposition verfahrbar sind. Auch hier sind die Anschlagsmittel vorzugsweise in die Ruheposition federelastisch vorgespant. Das Verschiebemittel wird relativ zur Führung vorzugsweise mittels eines Servomotors oder eines Linearmotors bewegt. Das Verschiebemittel kann beispielsweise als verschiebbarer Schlitten in der Führung gelagert sein. Das Verschiebemittel weist eine Mehrzahl von entlang der Querrichtung aufgereihten Löchern auf, wobei in einem der Löcher das als Stiftelement ausgeführte Anschlagsmittel axial geführt ist. Die Verschiebung des Verschiebemittels sorgt dafür, dass sämtliche auf diesem Verschiebemittel geführte Anschlagsmittel entlang der Querrichtung bewegt werden.

Gemäß einer weiteren bevorzugten Ausführungsform ist vorgesehen, dass der Grundkörper wenigstens ein weiteres Verschiebemittel aufweist, wobei das Verschiebemittel und das weitere Verschiebemittel auf einer Linie parallel zur Querrichtung angeordnet sind und unabhängig voneinander entlang der Querrichtung linear verschiebbar sind. In vorteilhafter Weise können somit wenigstens zwei Anschlagsmittel unabhängig voneinander bewegt werden, welche sich entlang der Förderrichtung auf gleicher Höhe befinden. Auf diese Weise kann beispielsweise ein Transportgut zwischen zwei aufeinander zu fahrenden Anschlagsmitteln fixiert bzw. ausgerichtet werden. Hierfür sind wenigstens ein Anschlagsmittel auf dem Verschiebemittel und wenigstens ein Anschlagsmittel auf dem weiteren Verschiebemittel angeordnet. Die Anschlagsmittel werden vorteilhafterweise gemeinsam durch die separate Aktuierungseinrichtung bewegt. Denkbar ist auch, dass auf einer Höhe der Förderrichtung eine Vielzahl von Verschiebemitteln angeordnet ist.

Gemäß einer weiteren bevorzugten Ausführungsform ist vorgesehen, dass die Aktuatoreinrichtung eine sich parallel zum Verschiebemittel erstreckende Aktuatorleiste aufweist, welche zum Überführen des wenigstens einen Anschlagsmittels von der Ruheposition in die Arbeitsposition entlang der zur Förderebene senkrechten Richtung motorisch in Richtung des Verschiebemittels bewegbar ist. In vorteilhafter Weise werden die auf den Verschiebemitteln angeordneten Anschlagsmittel nicht durch die Stößel (wäre zumindest in der Grundposition jedoch auch denkbar), sondern mittels der sich parallel zur Querrichtung erstreckenden Aktuatorleiste von der Ruheposition in die Arbeitsposition verfahren. Dies hat den Vorteil, dass bei einer Bewegung der Verschiebemittel und somit auch der Anschlagsmittel entlang der Querrichtung die Anschlagsmittel sich lediglich entlang der Aktuatorleiste bewegen und somit weiterhin ein Antreiben der Anschlagsmittel ermöglicht wird. Die Anschlagsmittel verbleiben somit entlang einer zur Förderebene senkrechten Richtung stets deckungsgleich mit der Aktuatorleiste. Auf diese Weise wird insbesondere ein gleichzeitiges Verfahren der Anschlagsmittel in die Arbeitsposition und ein Verschieben der Anschlagsmittel entlang der Querrichtung ermöglicht. Alternativ ist denkbar, dass ein Kopplungsarm zwischen der Aktuatorleiste und dem Verschiebemittel angeordnet ist, wodurch die Aktuatorleiste mit dem sich quer zur Querrichtung bewegenden Verschiebemittel mitbewegt wird. In diesem Fall sind vorzugsweise Stößel in Aufnahmelöchern der Aktuatorleiste angeordnet, welche entlang der zur Förderebene senkrechten Richtung deckungsgleich mit denjenigen Anschlagsmitteln angeordnet sind, welche von der Ruheposition in die Arbeitsposition verfahren werden sollen. Alternativ ist denkbar, dass die Aktuatorleiste Aufnahmelöcher zur Aufnahme der Endbereiche der Stiftelemente aufweist, wodurch eine formschlüssige Kopplung zwischen Stiftelementen und Aktuatorleiste hinsichtlich einer zur Querrichtung parallelen Bewegung erzielt wird.

Ein weiterer Gegenstand der vorliegenden Erfindung ist eine Vorrichtungsanordnung gemäß Anspruch 9. In vorteilhafter Weise wird bei der erfindungsgemäßen Vorrichtungsanordnung nicht nur ein Ausfahren der Anschlagsmittel von der Ruheposition in die Arbeitsposition senkrecht zur Förderebene erzielt, sondern darüber hinaus ist eine Bewegung der in den Förderweg ragenden Anschlagsmittel parallel zur Förderebene möglich. Denkbar ist beispielsweise, dass zur Ausrichtung eines Transportgutes zwei Anschlagsmittel in die Arbeitsposition verfahren werden, so dass sich zwischen den zwei Anschlagsmitteln das Transportgut befindet, und dass anschließend die beiden Anschlagsmittel parallel zur Förderebene aufeinander zu bewegt werden, damit das Transportgut formschlüssig zwischen den beiden Anschlagsmittel eingespannt und somit präzise positioniert wird.

Ein weiterer Gegenstand der vorliegenden Erfindung ist eine Fördereinrichtung gemäß Anspruch 10. In vorteilhafter Weise wird somit eine Fördereinrichtung mit einer Vorrichtung zum Stoppen und/oder Ausrichten der Transportgüter bereitgestellt, mit welcher die oben genannten Vorteile, wie einfacher und kostengünstiger Aufbau und vereinfachte Ansteuerung, zu erzielen sind. Ferner wird eine flexible Anpassung der Fördereinrichtung an unterschiedliche Transportgutgeometrien, Förderbegebenheiten und gewünschte Stop- bzw. Positionierungsanforderungen ermöglicht. Hierdurch wird insbesondere die benötigte Unterbrechungszeit beim Umstellen der Fördereinrichtung auf ein Transportgut unterschiedlicher Form oder Größe im Vergleich zum Stand der Technik erheblich verkürzt. Die Anschlagsmittel sind vorzugsweise jeweils in einer zur Förderebene parallelen Ebene zwischen zwei benachbarten Stützrollen angeordnet. In der Arbeitsposition sind die Anschlagsmittel dabei insbesondere in einer über die Stützrollen hinaus in den Förderweg ragenden Stellung angeordnet, während in der Ruheposition die Anschlagsmittel in einer gegenüber dem Förderweg zurückgezogenen Stellung angeordnet sind. In der zurückgezogenen Stellung ragen die Anschlagsmittel insbesondere nicht über die Stützrollen in den Förderweg hinein, so dass Transportgüter die zurückgezogenen Anschlagsmittel entlang des Förderwegs ungehindert passieren können.

Gemäß einer bevorzugten Ausführungsform der vorliegenden Erfindung ist vorgesehen, dass die Fördereinrichtung wenigstens zwei erfindungsgemäße Vorrichtungen zum Stoppen und/oder Ausrichten der Transportgüter aufweist, wobei die wenigstens zwei Vorrichtungen in einer zur Förderebene parallelen Ebene relativ zueinander bewegbar sind, insbesondere mittels eines weiteren Nockenantriebs.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Perspektivansicht einer Mehrzahl von Vorrichtungen gemäß einer beispielhaften Ausführungsform der vorliegenden Erfindung.
- **Figur 2**: zeigt eine schematische Perspektivansicht der Vorrichtungen gemäß der beispielhaften Ausführungsform der vorliegenden Erfindung.
- **Figur 3**: zeigt einen vergrößerten Ausschnitt der Perspektivansicht der Vorrichtung gemäß der beispielhaften Ausführungsform der vorliegenden Erfindung.
- **Figur 4**: zeigt eine schematische Seitenansicht der Mehrzahl von Vorrichtungen gemäß der beispielhaften Ausführungsform der vorliegenden Erfindung.
- **Figur 5**: zeigt eine schematische Aufsichtsdarstellung der Mehrzahl von Vorrichtungen gemäß der beispielhaften Ausführungsform der vorliegenden Erfindung.
- **Figuren 6a bis 6d**: zeigen anhand schematischer Seitenansichten der Mehrzahl von Vorrichtungen ein Verfahren gemäß der beispielhaften Ausführungsform der vorliegenden Erfindung.
- **Figur 7a bis 7c**: zeigen schematische Perspektiv- und Detailansichten einer Vorrichtung gemäß einer weiteren beispielhaften Ausführungsform der vorliegenden Erfindung.
- **Figur 8**: zeigt eine schematische Perspektivansicht eines Verschiebemittels der Vorrichtung gemäß der weiteren beispielhaften Ausführungsform der vorliegenden Erfindung.
- **Figur 9**: zeigt einen vergrößerten Ausschnitt einer Schnittbildansicht der Vorrichtung gemäß der weiteren beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

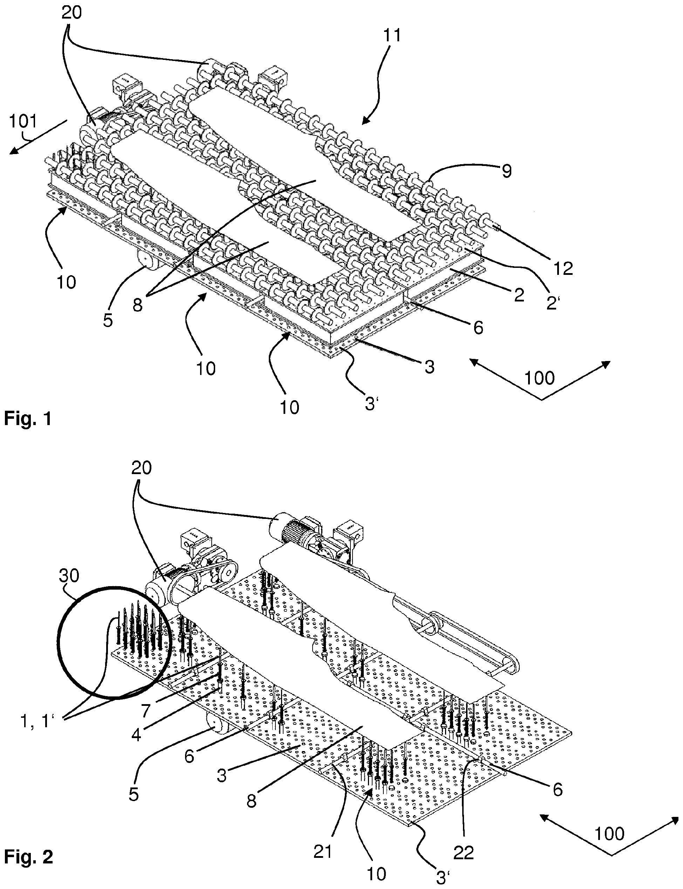

In **Figur 1** ist eine schematische Perspektivansicht einer Mehrzahl von Vorrichtungen 10 gemäß einer beispielhaften Ausführungsform der vorliegenden Erfindung, sowie einer Vorrichtungsanordnung und einer Fördereinrichtung 11 jeweils gemäß einer beispielhaften Ausführungsform der vorliegenden Erfindung dargestellt.

Die Fördereinrichtung 11 umfasst einen Rollenförderer. Der Rollenförderer besteht aus einer Mehrzahl von Stützrollen 9, die jeweils auf parallel zueinander verlaufenden Wellen 12 angeordnet sind. Die Stützrollen 9 sind zum Stützen bzw. Aufnehmen von Transportgütern 8, im vorliegenden Beispiel Karosseriebauteile, und zum Transportieren der Transportgüter 8 entlang einer sich entlang einer Förderebene 100 erstreckenden Förderrichtung 101 vorgesehen. Die Wellen 12 sind entweder frei drehbar gelagert und/oder werden mittels eines nicht abgebildeten Antriebsmotors derart angetrieben, dass die Transportgüter 8 aufgrund von zwischen den Stützrollen 9 und den Transportgütern 8 wirkenden Reibkräften zu einer Bewegung entlang der Förderrichtung 101 angetrieben werden. Die Fördereinrichtung 11 weist ferner Vorrichtungen 10 zum Stoppen und Ausrichten der Transportgüter 8 auf der Fördereinrichtung 11 auf.

Die Vorrichtungen 10 umfassen jeweils einen kassettenartigen Grundkörper 2, welcher in Form einer Lochplatte 2' ausgebildet ist, sowie Anschlagsmittel 1, welche in Form von Stiftelementen 1' (in Figur 1 aus perspektivischen Gründen nicht sichtbar) ausgebildet sind. Die Stiftelemente 1' sind in den Löchern der Lochplatte 2' derart geführt, dass die Stiftelemente 1' relativ zur Lochplatte 2' entlang einer zur Förderebene 100 senkrechten Richtung translatorisch bewegbar sind. Die Stiftelemente 1' sind zwischen einer Arbeitsposition, in welcher die Stiftelemente 1' entlang der senkrechten Richtung über die Stützrollen 9 hinaus in den Förderweg vorstehen, und einer Ruheposition, in welcher die Stiftelement 1' in einer gegenüber der Arbeitsposition zurückgezogenen Stellung sind, d.h. nicht entlang der senkrechten Richtung über die Stützrollen 9 hinaus in den Förderweg ragen, verschiebbar. Der Grundkörper 2 fungiert somit als Stiftträger. In der Ruheposition können die Anschlagsmittel 1 von einem Transportgut 8 ungehindert passiert werden, während in der Arbeitsposition ein Transportgut 8 die Anschlagsmittel 1 nicht ungehindert passieren kann, sondern von den Anschlagsmitteln 1 vorzugsweise gestoppt oder relativ zur Fördereinrichtung 11 entsprechend ausgerichtet wird. Jedes Stiftelement 1' ist ferner mit einer Druckfeder 7 ausgestattet, welche die Stiftelemente 1' jeweils elastisch in ihre Ruheposition vorspannen. Die Stiftelemente 1', sowie die entsprechenden Löcher in der Lochplatte 2' sind in einer zur Förderebene 100 parallelen Ebene gleichmäßig verteilt in Form eines Punktrasters angeordnet, d.h. "nagelbettähnlich" aufgereiht. Auf diese Weise können an nahezu jedem Ort in der Förderebene 100 Anschlagsmittel 1 einzeln oder in Gruppen ausgefahren werden, so dass beliebige an die Fördereinrichtung 11 oder an Transportgüter 8 individuell angepasste Anschlags-, Stopp- oder Ausrichtungskonfigurationen durch ein entsprechendes Verschieben einer Mehrzahl von Anschlagsmitteln 1 von der Ruheposition in ihre Arbeitsposition realisierbar sind. Insbesondere ist zum Umrüsten der Vorrichtung 10 auf andere Transportgüter 8 kein Austausch von Anschlagsmitteln 1 erforderlich, sondern es müssen lediglich andere Anschlagsmittel 1 ausgefahren werden. Insbesondere verbleiben somit stets alle Anschlagsmittel 1 in den Vorrichtungen 10.

Jede der Vorrichtungen 10 weist ferner eine Aktuatoreinrichtung 3 zum gemeinsamen Bewegen der Anschlagsmittel 1 einer Vorrichtung 10 von der Ruheposition in ihre Arbeitsposition auf. Die Aktuatoreinrichtung 3 umfasst jeweils eine oder mehrere als Matrix ausgebildete weitere Lochplatten 3', welche mittels eines in Form eines Nockens 5' ausgebildeten Antriebsmittels 5 entlang der senkrechten Richtung und in Richtung des Grundkörpers 2 zu bewegen ist. Die weiteren Lochplatten 3' weisen dabei eine Vielzahl von in einer zur Förderebene 100 parallelen Ebene gleichmäßig verteilten Löchern auf, welche entlang der vertikalen Richtung insbesondere deckungsgleich zu den in der Lochplatte 2' ausgebildeten Löchern bzw. zu den Anschlagsmitteln 1 angeordnet sind. Die Aktuatoreinrichtung 3 weist ferner Stößel 4 auf, welche frei konfigurierbar und je nach Anwendungsfall in bestimmten Löchern der Lochmatrix bzw. weiteren Lochplatten 3' befestigt sind. Die Stößel 4 werden somit bei einer durch das Antriebsmittel 5 hervorgerufenen Aufwärtsbewegung der weiteren Lochplatten 3' zusammen mit den weiteren Lochplatten 3' in Richtung der Fördereinrichtung 11 bewegt. Die dem Grundkörper 2 zugewandten Enden der Stößel 4 gelangen hierdurch in mechanischen Kontakt mit den entsprechenden den weiteren Lochplatten 3' zugewandten Enden der Stiftelemente 1', wodurch diese Stiftelemente 1' entgegen der Federkraft der Druckfedern 7 von ihrer Ruheposition in ihre Arbeitsposition bewegt werden. Die übrigen Stiftelemente 1' verbleiben in ihrer Ruheposition. Je nach Anordnung der Stößel 4 auf den weiteren Lochplatten 3' werden somit unterschiedliche Stiftelemente 1' betätigt. Die Ansteuerung der Stiftelemente 1' und ihr Produktbezug wird durch die schnell auswechselbare oder schnell einrichtbare Matrix aus an den weiteren Lochplatten 3' befestigten Stößeln 4 unterhalb der Stiftelemente 1' erreicht, die lediglich die produktionsrelevanten Stiftelemente 1' hochfahren und diejenigen Stiftelemente 1', die nicht zum Stopp oder zur Zentrierung des diskret vorliegenden Transportguts 8 benötigt werden, in ihrer Ruheposition belassen. Die Stößel 4 sind vorzugsweise in den Löchern der weiteren Lochplatten 3' lösbar verschraubt. Jede der Vorrichtungen 10 ist somit durch ein einfaches Versetzen der Stößel 4 auf den weiteren Lochplatten 3' oder durch Austausch der weiteren Lochplatten 3' frei konfigurierbar. Die Stößel 4 sind dabei insbesondere in unterschiedlichen Positionen parallel zur Förderebene 100, als auch senkrecht zur Förderebene 100 positionierbar. Wenn die Stößel 4 entlang der senkrechten Richtung in unterschiedlichen Positionen angebracht sind, werden die Stiftelemente 1' von der gemeinsamen Aktuatoreinrichtung 3 zu unterschiedlichen Zeitpunkten von der Ruheposition in die Arbeitsposition verfahren, so dass in einfacher Weise eine zeitliche Abfolge frei definierbar ist. Durch unterschiedliche Kurvensteigungen am Umfang des Nockens 5' können wechselnde Ausfahrgeschwindigkeiten der Stiftelemente 1' erzeugt werden.

Der Grundkörper 2 bildet zusammen mit den Anschlagsmitteln 1 eine Anschlagseinheit, wobei die Aktuatoreinrichtung 3 zusammen mit den Stößeln 4 eine von der Anschlagseinheit separierte Aktuatoreinheit bildet. Die Anschlagseinheit und die Aktuatoreinheit sind somit voneinander unabhängig und modular austauschbar. Die Anschlagseinheit kann daher mit unterschiedlichen Aktuatoreinheiten 3 betrieben werden, wodurch vorteilhafterweise eine besonders flexible und schnelle Anpassung der Vorrichtung 10 an unterschiedlich ausgeformte Transportgüter 8 erfolgen kann. Zur Anpassung der Vorrichtung 10 muss lediglich die das Stößelmuster aufweisende weitere Lochplatte 3' der Aktuatoreinheit umkonfiguriert oder getauscht werden. Vorzugsweise ist zum Austauschen der weiteren Lochplatte 3', welche mit einer individuellen Konfiguration von Stößeln 4 bestückt ist, die Aktuatoreinheit parallel zur Förderebene 100 schubladenartig aus der Vorrichtung 10 ausziehbar.

Die Vorrichtungen 10 sind optional parallel zur Förderebene 100 nebeneinander in Form einer Vorrichtungsanordnung gemäß einer beispielhaften Ausführungsform der vorliegenden Erfindung angeordnet. Die benachbarten Vorrichtungen 10 sind dabei jeweils mittels eines weiteren Nockenantriebs 6 parallel zur Hauptebene 100 und relativ zueinander verschiebbar. Auf diese Weise können die Anschlagsmittel 1 einer Vorrichtung 10 relativ zu den Anschlagsmitteln 1 einer benachbarten Vorrichtung 10 bewegt werden. Die Vorrichtungsanordnung ist dabei je nach Anwendungsfall vorzugsweise modular aus einer beliebigen Anzahl von Vorrichtungen 10 aufgebaut. Durch eine entsprechende Auswahl und Kombination einer bestimmten Anzahl von Vorrichtungen 10 kann die Vorrichtungsanordnung flexibel an die Bedürfnisse einer beliebigen Fördereinrichtung 11 angepasst werden.

In **Figur 2** ist eine schematische Perspektivansicht der Vorrichtungen 10 gemäß der beispielhaften Ausführungsform der vorliegenden Erfindung dargestellt. Die in Figur 2 illustrierten Vorrichtungen 10 sind dabei den in Figur 1 illustrierten Vorrichtungen 10 identisch, wobei lediglich aus Gründen der Übersichtlichkeit die Wellen 12, die Stützrollen 9, sowie die Grundkörper 2 nicht dargestellt sind. In Figur 2 sind somit von jeder Vorrichtung 10 die Stiftelemente 1' zusammen mit den jeweiligen Druckfedern 7 erkennbar. Einige der Stiftelemente 1' werden von den an den jeweiligen weiteren Lochplatten 3' angebrachten Stößeln 4 betätigt. Zwischen benachbarten Vorrichtungen 10 verlaufen jeweils die Nockenantriebe 6, welche weitere Wellen 21 und auf den weiteren Wellen 21 angeordnete weitere Nocken 22 umfassen. Die Nockenantriebe 6 werden mittels Motoren 20 angetrieben. Durch eine Drehung der weiteren Nocken 22 mittels der Motoren 20 werden benachbarte Vorrichtungen 10 relativ zueinander verschoben. Vorzugsweise ist vorgesehen, dass benachbarte Vorrichtungen 10 mittels nicht dargestellter weiterer Federelemente aufeinander zu federbeaufschlagt sind. Durch das Drehen der weiteren Nocken 22 werden die benachbarten Vorrichtungen 10 dann entgegen dieser Federkräfte voneinander beabstandet. Auf diese Weise ist die Relativbewegung zwischen den Stiftelementen 1' verschiedener Vorrichtungen 10 parallel zur Förderebene 100 zu erzielen. Denkbar ist, dass mittels der weiteren Nocken 22 die Vorrichtungen 10 zunächst entgegen der Federkräfte voneinander beabstandet werden, anschließend die Stiftelemente 1' von der Ruheposition in die Arbeitsposition verfahren werden, wenn sich ein Transportgut 8 zwischen den Stiftelementen 1' befindet, und abschließend die weiteren Nocken 22 in eine senkrechte Position verfahren werden, so dass sich benachbarte Vorrichtungen 10 aufgrund der Federkräfte aufeinander zu bewegen und somit die Transportgüter 8 durch die sich aufeinander zu bewegenden und in der Arbeitsposition befindlichen Stiftelemente 1' formschlüssig umgriffen und somit präzise positioniert werden. Auch denkbar ist - wie schon bei den Nocken 5' für die Auf- und Abwärtsbewegung der Stößel 4 und der Anschlagmittel 1 - eine unterschiedliche Gestaltung der Kurvensteigung der weiteren Nocken 22 mit dem Ziel, verschiedene Vorrichtungen 10 mit zueinander differierenden Hüben und Geschwindigkeiten relativ zueinander zu bewegen. Derart können unterschiedlichste Anschlags- und Ausrichtungsverhältnisse individuell auf Transportgüter 8 angepasst werden.

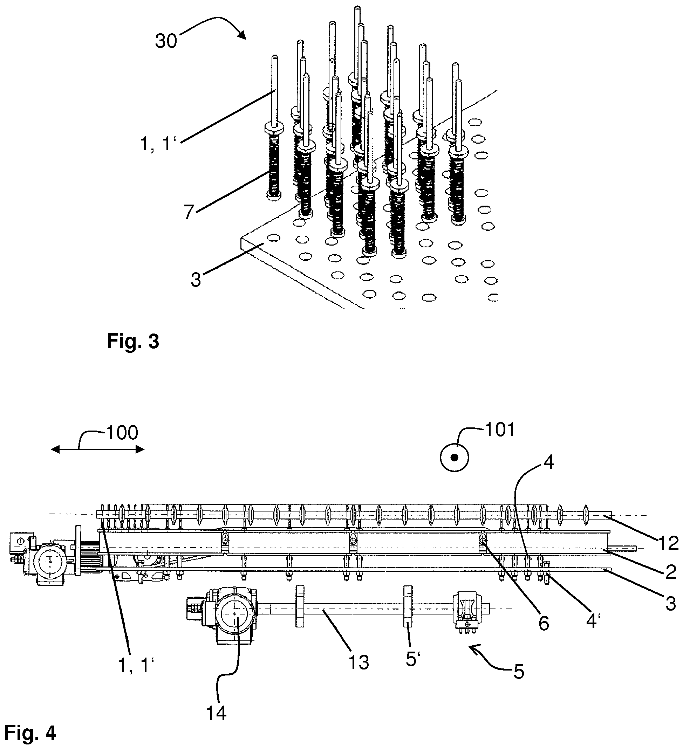

In **Figur 3** ist ein vergrößerter Ausschnitt 30 der in Figur 2 illustrierten Perspektivansicht einer Vorrichtung 10 gemäß der beispielhaften Ausführungsform der vorliegenden Erfindung dargestellt. In dem Ausschnitt 30 sind die Stiftelemente 1' einer Vorrichtung 10, sowie die an den Stiftelementen 10 angreifenden Druckfedern 7 im Detail illustriert.

In **Figur 4** ist eine schematische Seitenansicht der Mehrzahl von Vorrichtungen 10 gemäß der beispielhaften Ausführungsform der vorliegenden Erfindung dargestellt. In dieser Seitenansicht ist das Antriebsmittel 5 zu sehen, welches einen auf einer Nockenwelle 13 angeordneten Nocken 5' umfasst. Eine Drehung der Nockenwelle 13 führt dazu, dass der Nocken 5' eine dem Antriebsmittel 5 zugewandte Seite der weiteren Lochplatten 3' in Richtung der Grundkörper 2 kraftbeaufschlagt, wodurch die Stößel 4 in Richtung der Stiftelemente 1' bewegt werden. In der vorliegenden Ausführungsform weist die Vorrichtungsanordnung eine einzige weitere Lochplatte 3' für mehrere Grundkörper 2 auf, so dass allein durch die Bewegung des einen Nockens 5' eine Mehrzahl von Stiftelementen 1' von unterschiedlichen Vorrichtungen 10 gemeinsam betätigt werden. Alternativ ist aber auch denkbar, dass jede dieser Vorrichtungen 10 ein eigenes derartiges Antriebsmittel 5 aufweist, welches immer nur eine Mehrzahl von Stiftelementen 1' einer einzigen Vorrichtung 10 gemeinsam betätigt. Die Nockenwelle 13 wird vorzugsweise von einem weiteren Motor 14 angetrieben. In Figur 4 ist ferner zu erkennen, dass zumindest beispielhaft wenigstens ein bestimmter Stößel 4' gegenüber den übrigen Stößeln 4 entlang der senkrechten Richtung versetzt an den weiteren Lochplatten 3' befestigt ist. Dies hat zur Folge, dass bei einem Hochfahren der Lochplatten 3' das diesem bestimmten Stößel 4' zugeordnete Stiftelement 1' zeitlich versetzt zu den übrigen durch die Stößel 4 betätigten Stiftelementen 1' in die Arbeitsposition verfahren wird. Die Größe des Versatzes entlang der senkrechten Richtung bestimmt also den Zeitverzug beim Verfahren der Stiftelemente 1' von der Ruheposition in die Arbeitsposition.

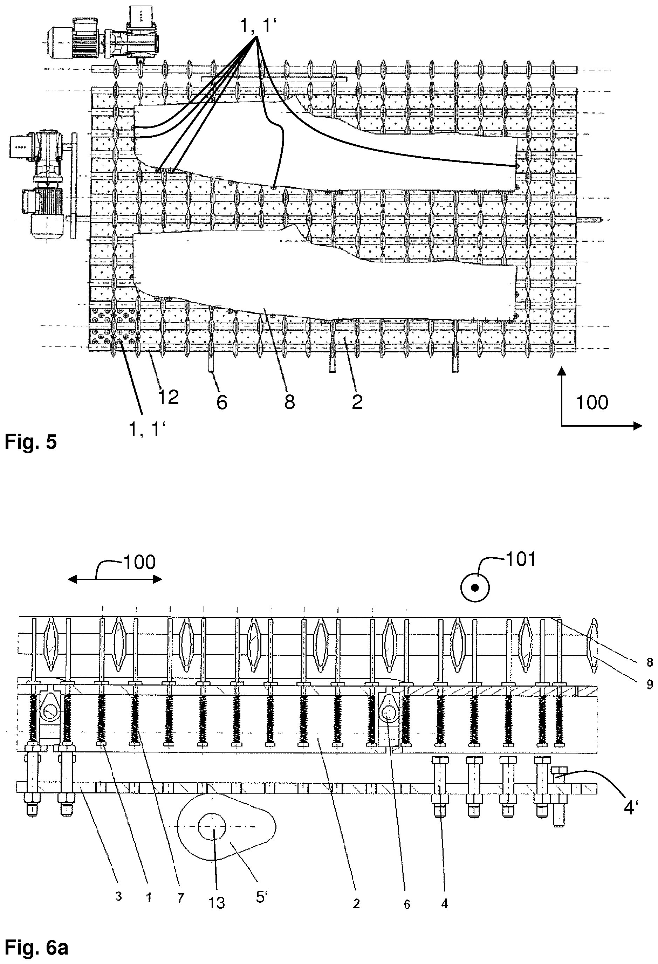

In **Figur 5** ist eine schematische Aufsichtsdarstellung der Mehrzahl von Vorrichtungen 10, der Vorrichtungsanordnung, sowie der Fördereinrichtung 11 jeweils gemäß der beispielhaften Ausführungsform der vorliegenden Erfindung dargestellt. Die in Figur 5 gezeigten Vorrichtungen 10 sind dabei den in Figur 1 illustrierten Vorrichtungen 10 identisch. In Figur 5 ist dabei zu erkennen, dass die beiden Transportgüter 8, welche im vorliegenden Beispiel Warmumform-Karosseriebauteile in einer Auslaufstrecke eines Glühofens sind, mittels in ihre Arbeitsposition verfahrenen Stiftelementen 1' positioniert wurden. Aufgrund der flexiblen Konfigurierbarkeit der Vorrichtungen 10 sind die Stiftelemente 1' dabei perfekt an den individuellen Außenumfang der Transportgüter 8 angepasst.

In den **Figuren 6a bis 6d** ist anhand schematischer Seitenansichten der Mehrzahl von Vorrichtungen 10 ein Verfahren gemäß der beispielhaften Ausführungsform der vorliegenden Erfindung dargestellt.

In Figur 6a befindet sich der Nocken 5' in einer zur Förderebene 100 parallelen, horizontalen Position, so dass die weiteren Lochplatten 3' in einer "unteren Stellung" (d.h. zwischen der weiteren Lochplatte 3' und dem Grundkörpern 2 ist ein maximaler Abstand) positioniert ist. Alle Stiftelemente 1' befinden sich daher aufgrund der von den Druckfedern 7 jeweils ausgeübten Federkräfte in ihrer Ruhestellung, so dass die Transportgüter 8 mittels der Stützrollen 9 ungehindert entlang der Förderrichtung 101 transportiert werden können.

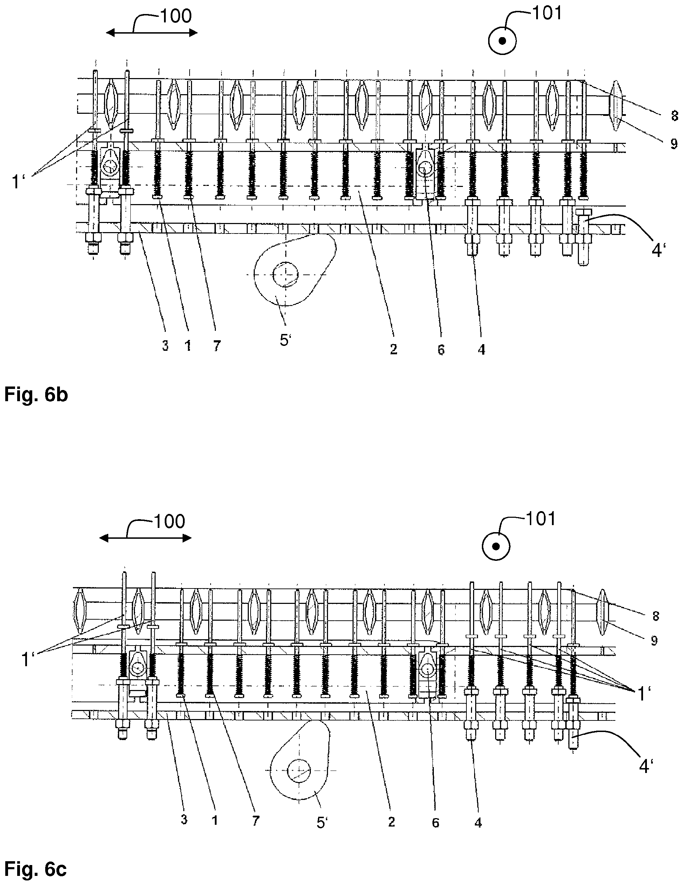

In Figur 6b ist der Nocken 5' gegenüber der in Figur 6a illustrierten Stellung derart gedreht, dass die weiteren Lochplatten 3' in Richtung der Grundkörper 2 verschoben ist. Hierdurch gelangen die am stärksten in Richtung Grundkörper 2 vorstehenden Stößel 4 mit den ihnen zugeordneten Stiftelementen 1' in Formschluss. Der gegenüber den übrigen Stößeln 4 entlang der senkrechten Richtung versetzt an den weiteren Lochplatten 3' befestigte bestimmte Stößel 4' ist von dem ihm zugeordneten Stiftelement 1' hingegen noch beabstandet.

In Figur 6c ist der Nocken 5' noch weitergedreht, so dass diejenigen Stiftelemente 1', welche bereits in Figur 6b mit den Stößeln 4 in Kontakt waren, mittels der Stößel 4 von ihrer Ruheposition in ihre Arbeitsposition bewegt wurden. Ferner ist nun der bestimmte Stößel 4' ebenfalls in Formschluss mit dem ihm zugeordneten Stiftelement 1' gelangt.

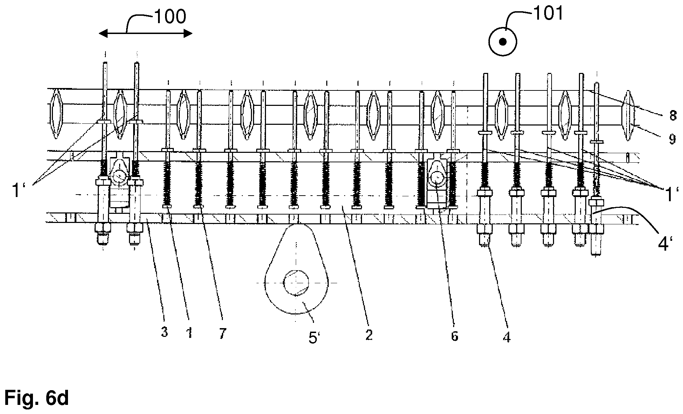

In Figur 6d ist der Nocken 5' nun parallel zur senkrechten Richtung ausgerichtet, wodurch sich die weiteren Lochplatten 3' in ihrer "oberen Stellung" (d.h. der Abstand zwischen den weiteren Lochplatten 3' und dem Grundkörper 2 ist minimal) befindet. In dieser Position ist die weiteren Lochplatten 3' derart in Richtung der Grundkörper 2 verfahren, dass auch das dem bestimmten Stößel 4' zugeordnete Stiftelement 1' mittels des bestimmten Stößels 4' von seiner Ruheposition in seine Arbeitsposition verschoben wurde. Alle übrigen Stiftelemente 1', an deren Position parallel zur Förderebene 100 keine Stößel 4 an den weiteren Lochplatten 3' angeordnet sind, verbleiben in ihrer Ruheposition. Auf diese Weise können beispielweise bei mehreren hintereinander aus einem Ofen geförderten Produktionsteilen (auch als Transportgüter 8 bezeichnet) die Stiftelemente 1' zeitversetzt hochgefahren werden, wobei durch unterschiedlich hohe Stößel 4 an den weiteren Lochplatten 3' bei gleichzeitig kontinuierlichem Hochfahren der weiteren Lochplatte 3' die Stiftelemente 1' zeitversetzt angesteuert werden. Hierbei wird die Geschwindigkeit der hochfahrenden weiteren Lochplatten 3' durch den Nocken 5' veränderbar gehalten, der aufgrund seiner Kurvensteigung vorzugsweise ein unterschiedlich schnelles Auftauchen einzelner Gruppen von Stiftelementen 1' erlaubt.

Das Ausrichten der Transportgüter 8 quer zur Förderrichtung 101 wird durch gegenläufiges seitliches Verfahren der in die Arbeitsposition verfahrenen Stiftelemente 1' an den Flanken der Transportgüter 8 nach dem Stopp der Transportgüter 8 erreicht. Hierbei wird der Nockenantrieb 6, der die segmentierten und federvorbelasteten Grundkörper 2 zusammen bzw. auseinander fährt, entsprechend gesteuert. Hublänge und Geschwindigkeit sind von der Steigung des Steuernockens 22 abhängig.

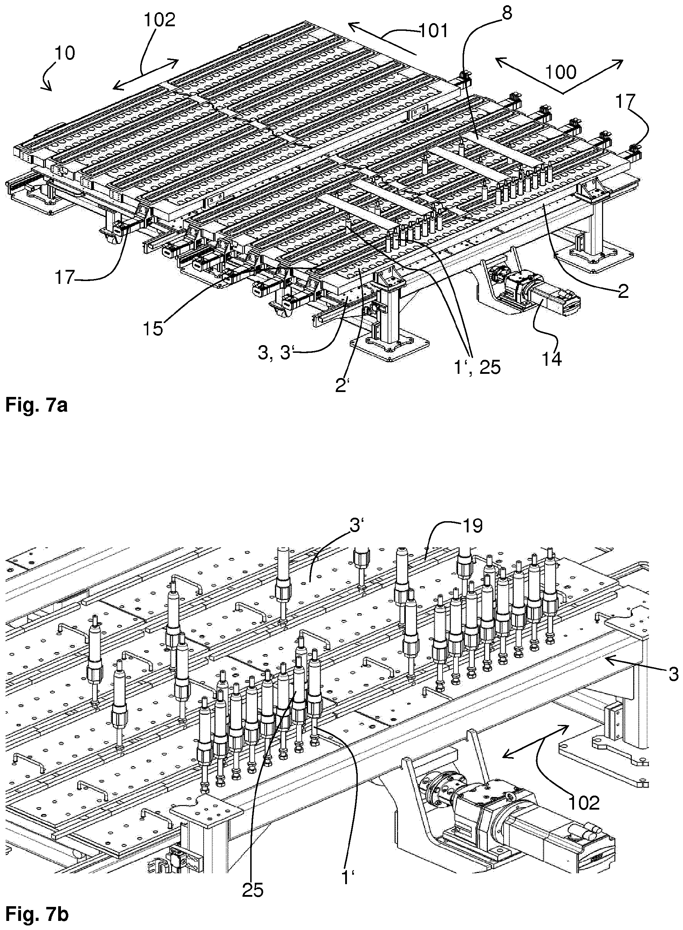

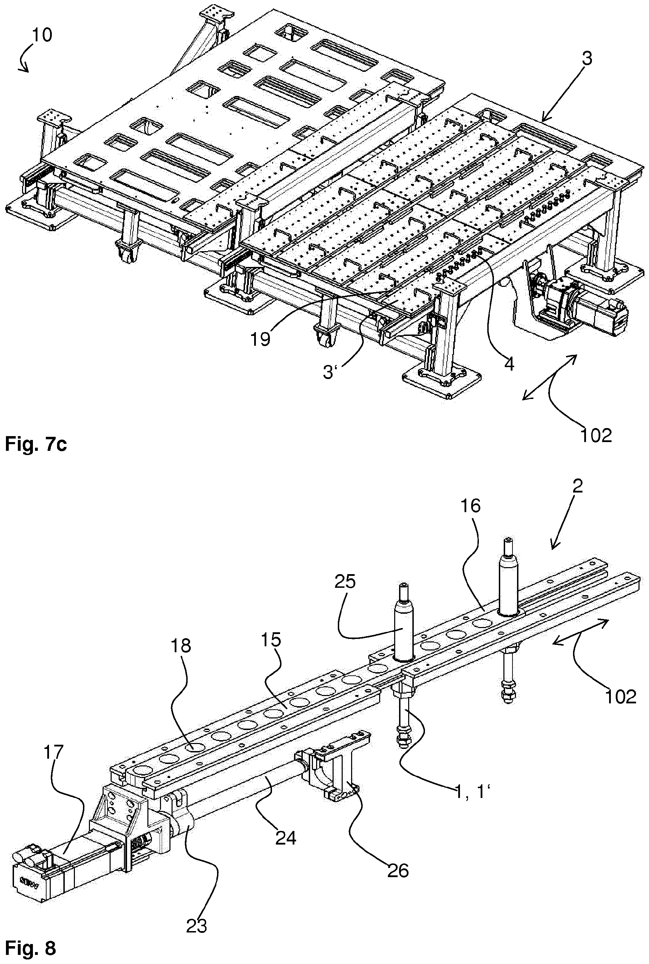

In **Figur 7a bis 7c** sind schematische Perspektiv- und Detailansichten einer Vorrichtung 1 gemäß einer weiteren beispielhaften Ausführungsform der vorliegenden Erfindung dargestellt, wobei die weitere Ausführungsform im Wesentlichen der anhand Figuren 1 bis 6d erläuterten Ausführungsform ähnelt. Die als Stiftelemente 1' ausgebildeten Anschlagsmittel 1 sind jedoch nicht mehr nur in Löchern einer einzigen zusammenhängenden Lochplatte 2' geführt, sondern teilweise auch an leistenartig ausgebildeten Verschiebemitteln 15 angeordnet. Aus Gründen der Übersichtlichkeit sind in den Figuren 7a, 7b und 7c die Stützrollen des Rollenförderers nicht dargestellt. Der Grundkörper 2 weist sowohl Lochplatten 2', als auch separate Verschiebemittel 15 jeweils zur Lagerung der Stiftelemente 1' auf. Die Lochplatten 2' und die Verschiebemittel 15 sind in einer zur Förderebene 100 parallelen Ebene und entlang der Förderrichtung 101 abwechselnd angeordnet. Die Verschiebemittel 15 sind entlang einer sich zur Förderrichtung 101 senkrechten und zur Förderebene 100 parallelen Querrichtung 102 verschiebbar ausgebildet. Die Anschlagsmittel 1 sind dabei axial verschiebbar in Führungslöchern 18 des Verschiebemittels 15 geführt. Die Vorrichtung 10 weist für jedes Verschiebemittel 15 einen elektrischen Servormotor 17 auf, welcher über einen Spindelantrieb 24 das Verschiebemittel 15 zu einer Bewegung entlang der Querrichtung 102 antreibt. Die Verschiebemittel 15 sind dabei in einer feststehenden Führung 16 längsverschiebbar gelagert. Eine Detailansicht einer solchen Anordnung aus Verschiebemittel 15, Führung 16, Servomotor 17, Spindelantrieb 24 und Stiftelemente 1' ist in Figur 8 dargestellt.

In Figuren 7b und 7c ist die Vorrichtung 10 ohne Grundkörper 2 illustriert, um eine Detailansicht der Aktuatoreinrichtung 3 bereitzustellen. Im vorliegenden Beispiel umfasst die Aktuatoreinrichtung 3 eine Mehrzahl von weiteren Lochplatten 3', in deren Löchern Stößel 4 in einem an das zu transportierende Transportgut 8 individuell angepassten Muster angeordnet sind. Zwischen den weiteren Lochplatten 3' sind ferner sich entlang der Querrichtung 102 erstreckende Aktuatorleisten 19 angeordnet. Die weiteren Lochplatten 3' und die Aktuatorleisten 19 sind durch ein gemeinsames Antriebsmittel 5 entlang einer zur Förderebene 100 senkrechten Richtung in Richtung der Förderebene 100 bewegbar. Das gemeinsame Antriebsmittel 5 umfasst beispielsweise einen Motor 14, dessen Antriebswelle mit einem Nocken 5' verbunden ist (siehe Figur 4). Die Stößel 4 gelangen somit in Kontakt mit den Enden der in den Lochplatten 2' axialverschiebbaren Stiftelementen 1', wodurch diese Stiftelemente 1' zwischen den Stützrollen 9 hindurch in die Förderebene 100 bewegt werden. Gleichzeitig gelangen die Aktuatorleisten 19 mit den Enden derjenigen Stiftelemente 1', welche in den Verschiebmitteln 15, axialverschiebbar geführt sind, in Kontakt, wodurch auch diese Stiftelemente 1' zwischen den Stützrollen 9 hindurch in die Förderebene 100 und somit von der Ruheposition in die Arbeitsposition bewegt werden. Gleichzeitig ist es möglich, diese Stiftelemente 1' in ihrer Arbeitsposition mittels einer Bewegung der Verschiebemittel 15 (in Figur 7b nicht dargestellt) entlang der Querrichtung 102 zu bewegen. Aufgrund der entlang der Querrichtung 102 ausgestreckten leistenartigen Ausbildung der Aktuatorleisten 19 bleiben die Stiftelemente 1' dabei in Kontakt mit den Aktuatorleisten 19 und werden beim Verschieben entlang der Querrichtung 102 nicht durch die Federvorspannung zurück in die Ruheposition verfahren. Auf diese Weise kann Transportgut 8 in der Förderebene 100 ausgerichtet, gedreht oder quer zur Förderrichtung 101 verschoben werden. Die Aktuatorleisten 19 werden hierbei nicht entlang der Querrichtung 102 bewegt. Alternativ ist aber auch denkbar, dass die Aktuatorleisten 19 ebenfalls entlang der Querrichtung 102 verschiebbar gelagert sind und Aufnahmelöcher aufweisen, in welchen jeweils das Ende des Stiftelements 1' bis zu einem Anschlag aufgenommen werden kann. Hierdurch bewegt sich die Aktuatorleiste 19 bei einer Bewegung des Verschiebemittels 15 entlang der Querrichtung 102 mit dem Verschiebemittel 15 mit. Ferner ist denkbar, dass die Aktuatorleiste 19 über einen Kopplungsarm mit dem Spindelantrieb 24 oder dem Verschiebemittel 15 gekoppelt ist und somit zu einer zum Verschiebemittel 15 synchronen Bewegung entlang der Querrichtung 102 angetrieben wird.

In **Figur 8** ist eine schematische Perspektivansicht eines Verschiebemittels 15 der Vorrichtung 10 gemäß der weiteren beispielhaften Ausführungsform der vorliegenden Erfindung im Detail dargestellt. Es ist zu sehen, dass das Verschiebemittel 15 mehrere Führungslöcher 18 aufweist, in welchen je nach Anforderung Stiftelemente 1' angeordnet werden können. Das Verschiebemittel 15 ist nach Art eines Schlittens in der Führung 16 verschiebbar gelagert und mittels des Servomotors 17 entlang der Querrichtung 102 bewegbar. Hierfür ist der Servomotor 17 mit einem Spindelantrieb 24 gekoppelt, wobei auf der Spindel des Spindelantriebs 24 eine mit einem entsprechenden Innengewinde versehende Spindelmutter 23 läuft. Die Spindelmutter 23 ist ferner mit dem Verschiebemittel 15 gekoppelt. Eine Drehung der Spindel mittels des Servormotors 17 bewirkt sodann eine Verschiebung der Spindelmutter 23 entlang der Querrichtung 102 und somit eine Verschiebung des Verschiebemittels 15. Das freie Ende der Spindel ist ferner in einem Lagermittel 26 gelagert. Optional ist vorgesehen, dass der Servomotor 17 und somit auch das Verschiebemittel 15 über einen Kopplungsarm mit der zugehörigen Aktuatorleiste 19 (in Figur 8 nicht abgebildet) gekoppelt ist, damit die Aktuatorleiste 19 und das Verschiebemittel 15 stets eine synchrone Bewegung entlang der Querrichtung 102 ausführen. Alternativ zur Anordnung aus Servomotor 17 und Spindelantrieb 24 wäre auch eine Realisierung mit einem elektrischen Linearmotor denkbar.

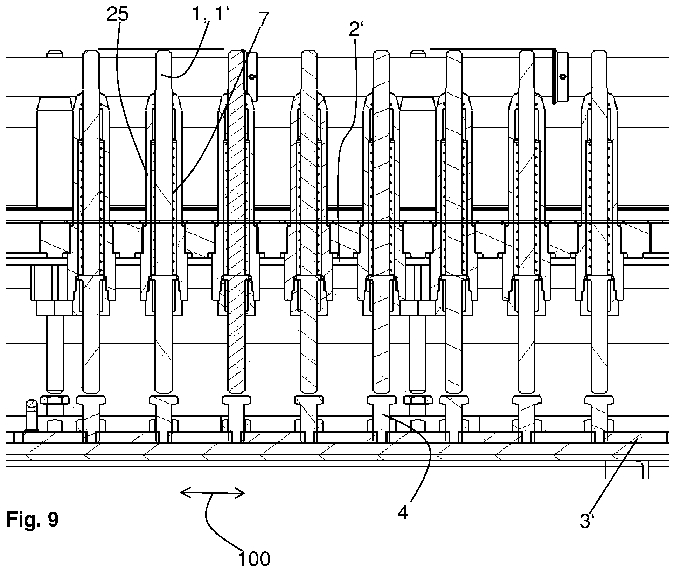

In **Figur 9** ist ein vergrößerter Ausschnitt einer Schnittbildansicht der Vorrichtung 10 gemäß der weiteren beispielhaften Ausführungsform der vorliegenden Erfindung dargestellt. In der Schnittbilddarstellung sind die in den weiteren Lochplatten 3' befestigten Stößel 4 dargestellt, welche im Aktuierungsfall auf die Enden der Stiftelemente 1' drücken, um die Stiftelemente 1' entgegen der Federkraft von der Ruheposition in die Arbeitsposition zu verfahren. Im vorliegenden Beispiel sind die Stiftelemente 1' in Hülsen 25 eingekapselt, wobei die Hülsen 25 in den Löchern der Lochplatte 2' befestigt sind und die Stiftelemente 1' relativ zu den Hülsen 25 axialverschiebbar gelagert sind. Zwischen den Hülsen 25 und dem Stiftelement 1' ist jeweils die Druckfeder 7 angeordnet, welche das Stiftelement 1' in die Ruheposition federelastisch vorspannt.

## Patentansprüche

1. Vorrichtung (10) zum Stoppen und/oder Ausrichten von Transportgütern (8) auf einer Fördereinrichtung (11), insbesondere einem Rollenförderer, aufweisend einen Grundkörper (2) und eine von dem Grundkörper (2) aus in einen Förderweg der Fördereinrichtung (11) bewegbare Stoppeinrichtung zum Stoppen und/oder Ausrichten der entlang des Förderwegs transportierten Transportgüter (8), wobei die Stoppeinrichtung wenigstens zwei separate Anschlagsmittel (1) umfasst, wobei die Anschlagsmittel (1) senkrecht zu einer Förderebene (100) der Fördereinrichtung (11) zwischen der Arbeitsposition und der Ruheposition translatorisch bewegbar sind, wobei der Grundkörper (2) wenigstens eine Lochplatte (2') umfasst, wobei die Anschlagsmittel (1) jeweils Stiftelemente (1') umfassen, welche in Löchern der wenigstens einen Lochplatte (2') axial geführt sind und wobei die Vielzahl von Stiftelementen (1') in einer zur Förderebene (100) parallelen Ebene angeordnet sind, **dadurch gekennzeichnet, dass** die Anschlagsmittel (1) gemeinsamen mittels einer separaten Aktuatoreinrichtung (3) zwischen einer in die Förderebene (100) ragende Arbeitsposition und einer gegenüber der Förderebene (100) zurückgezogenen Ruheposition bewegbar sind, dass die Aktuatoreinrichtung (3) eine Mehrzahl von Stößeln (4) aufweist, welche zum Bewegen der Stiftelemente (1') senkrecht zur Förderebene (100) translatorisch bewegbar sind und dass der die Anschlagsmittel (1) haltende Grundkörper (2) zusammen mit den Anschlagsmitteln (1) eine Anschlagseinheit bildet und die Aktuatoreinrichtung (3) zusammen mit den Stößeln (4) eine von der Anschlagseinheit separierte Aktuatoreinheit bildet, wobei die Anschlagseinheit und die Aktuatoreinheit voneinander unabhängig und modular austauschbar sind.

2. Vorrichtung (10) nach Anspruch 1, wobei die Vielzahl von Stiftelementen (1') in der zur Förderebene (100) parallelen Ebene in einem im Wesentlichen gleichmäßig verteilten Punktraster angeordnet sind.

3. Vorrichtung (10) nach Anspruch 2, wobei die Aktuatoreinrichtung (3) eine Matrix umfasst, an welcher die Stößel (4) befestigt sind, wobei die Aktuatoreinrichtung (3) vorzugsweise wenigstens eine als Matrix ausgebildete weitere Lochplatte (3') umfasst, welche mittels eines Antriebsmittels (5) in Richtung der Förderebene (100) bewegbar ist.

4. Vorrichtung (10) nach Anspruch 3, wobei die Stößel (4) lösbar und hinsichtlich ihrer Position in einer zur Förderebene (100) parallelen Ebene und/oder hinsichtlich ihrer Relativposition senkrecht zur Förderebene (100) frei konfigurierbar an der weiteren Lochplatte (3') befestigt sind.

5. Vorrichtung (10) nach einem der Ansprüche 3 oder 4, wobei das Antriebsmittel (5) einen Nocken (5') umfasst, welcher um eine sich parallel zur Förderebene (100) erstreckende Nockenwelle (13) drehbar ist, wobei der Nocken (5') bevorzugt einen Umfang mit unterschiedlichen Kurvensteigungen aufweist und wobei die unterschiedlichen Kurvensteigungen besonders bevorzugt zur Steuerung der Stößel (4) mit unterschiedlichen Geschwindigkeiten vorgesehen sind.

6. Vorrichtung (10) nach einem der vorhergehenden Ansprüche, wobei zum Austauschen der weiteren Lochplatte (3'), welche mit einer individuellen Konfiguration von Stößeln (4, 4') bestückt ist, die Aktuatoreinheit parallel zur Förderebene (100) schubladenartig aus der Vorrichtung (10) ausziehbar ist.

7. Vorrichtung (10) nach einem der vorhergehenden Ansprüche, wobei zum Ausrichten eines Transportgutes (8) in der Förderebene (100) wenigstens ein Anschlagsmittel (1) entlang einer zur Förderrichtung (101) senkrechten und zur Förderebene (100) parallelen Querrichtung (102) bewegbar ist und der Grundkörper (2) wenigstens ein sich entlang der Querrichtung (102) erstreckendes Verschiebemittel (15) aufweist, welches in einer Führung (16) des Grundkörpers (2) entlang der Querrichtung (102) beweglich geführt ist, wobei das wenigstens eine Anschlagsmittel (1) am Verschiebemittel (15) befestigt ist.

8. Vorrichtung (10) nach Anspruch 7, wobei das Verschiebemittel (15) relativ zur Führung (16) mittels eines Servomotors (17) und/oder Linearmotors bewegbar ist und/oder wobei das Verschiebemittel (15) eine Mehrzahl von entlang der Querrichtung (102) aufgereihten Führungslöchern (18) aufweist, wobei in einem der Führungslöcher (18) das als Stiftelement (1') ausgeführte Anschlagsmittel (1) axial geführt ist und/oder wobei der Grundkörper (2) wenigstens ein weiteres Verschiebemittel (15) aufweist, wobei das Verschiebemittel (15) und das weitere Verschiebemittel (15) auf einer gemeinsamen zur Querrichtung (102) parallelen Linie angeordnet sind und unabhängig voneinander entlang der Querrichtung (102) linear verschiebbar sind und/oder wobei die Aktuatoreinrichtung (3) eine sich parallel zum Verschiebemittel (15) erstreckende Aktuatorleiste (17) aufweist, welche zum Überführen des wenigstens einen Anschlagsmittels (1) von der Ruheposition in die Arbeitsposition entlang der zur Förderebene (100) senkrechten Richtung motorisch in Richtung des Verschiebemittels (15) bewegbar ist.

9. Vorrichtungsanordnung aufweisend wenigstens zwei Vorrichtungen (10) nach einem der vorhergehenden Ansprüche, wobei die wenigstens zwei Vorrichtungen (10) in einer zur Förderebene (100) parallelen Ebene, insbesondere mittels eines Nockenantriebs (6), relativ zueinander bewegbar sind.

10. Fördereinrichtung (11), insbesondere Rollenförderer, zum Bewegen von Transportgütern (8) entlang eines Förderweges, welche eine Mehrzahl von drehbaren Stützrollen (9) zum Aufnehmen der Transportgüter (8) aufweist, **dadurch gekennzeichnet, dass** die Fördereinrichtung (11) eine Vorrichtung (10) zum Stoppen und/oder Ausrichten der Transportgüter (8) nach einem der Ansprüche 1 bis 8 aufweist.

11. Fördereinrichtung (11) nach Anspruch 10, wobei die Anschlagsmittel (1) jeweils in einer zur Förderebene (100) parallelen Ebene zwischen zwei benachbarten Stützrollen (9) angeordnet sind.

12. Fördereinrichtung (11) nach Anspruch 11, wobei in der Arbeitsposition die Anschlagsmittel (1) in einer über die Stützrollen (9) hinaus in den Förderweg ragenden Stellung sind und wobei in der Ruheposition die Anschlagsmittel (1) in einer gegenüber dem Förderweg zurückgezogenen Stellung angeordnet sind, wobei die Fördereinrichtung (11) wenigstens zwei Vorrichtungen (10) nach einem der Ansprüche 1 bis 8 aufweist, wobei die wenigstens zwei Vorrichtungen (10) in einer zur Förderebene (100) parallelen Ebene, insbesondere mittels eines Nockenantriebs (6), relativ zueinander bewegbar sind.

## Claims

1. Device (10) for stopping and/or aligning transport goods (8) on a conveying apparatus (11), in particular a roller conveyor, having a main part (2) and a stopping apparatus which can be moved out of the main part (2) into a conveying path of the conveying apparatus (11) in order to stop and/or align the transport goods (8) which are transported along the conveying path, wherein the stopping apparatus comprises at least two separate stop means (1), wherein the stop means (1) can be moved in a translatory fashion perpendicularly with respect to a conveying plane (100) of the conveying apparatus (11), between the working position and the rest position, wherein the main part (2) comprises at least one perforated panel (2'), wherein the stop means (1) each comprise pin elements (1') which are guided axially in holes in the at least one perforated panel (2'), and wherein the multiplicity of pin elements (1') are arranged in a plane, parallel to the conveying plane (100), **characterized in that** the stop means (1) can be moved together, by means of a separate actuator apparatus (3), between a working position, which projects into the conveying plane (100), and a rest position, which is retracted with respect to the conveying plane (100), **in that** the actuator apparatus (3) has a plurality of tappets (4) which can be moved in translatory fashion in order to move the pin elements (1') perpendicularly with respect to the conveying plane (100), and **in that** the main part (2) which holds the stop means (1) forms, together with the stop means (1), a stop unit, and the actuator apparatus (3) forms, together with the tappets (4), an actuator unit which is separated from the stop unit, wherein the stop unit and the actuator unit can be exchanged independently of one another and in a modular fashion.

2. Device (10) according to Claim 1, wherein the multiplicity of pin elements (1') are arranged in the plane, parallel to the conveying plane (100), in an essentially uniformly distributed dot matrix.

3. Device (10) according to Claim 2, wherein the actuator apparatus (3) comprises a matrix to which the tappets (4) are attached, wherein the actuator apparatus (3) preferably comprises at least one further perforated panel (3') which is embodied as a matrix and which can be moved in the direction of the conveying plane (100) by means of a drive means (5).

4. Device (10) according to Claim 3, wherein the tappets (4) are attached to the further perforated panel (3') detachably and/or in such a way that they can be freely configured in terms of their position in a plane parallel to the conveying plane (100) and/or in terms of their relative position perpendicularly with respect to the conveying plane (100).

5. Device (10) according to either of Claims 3 and 4, wherein the drive means (5) comprises a cam (5') which can be rotated about a cam shaft (13) which extends parallel to the conveying plane (100), wherein the cam (5') preferably has a circumference with different curve gradients, and wherein the different curve gradients are particularly preferably provided for controlling the tappets (4) at different speeds.

6. Device (10) according to one of the preceding claims, wherein in order to exchange the further perforated panel (3'), which is equipped with an individual configuration of tappets (4, 4'), the actuator unit can be pulled out of the device (10) in a drawer-like fashion parallel to the conveying plane (100).

7. Device (10) according to one of the preceding claims, wherein, in order to align transport goods (8) in the conveying plane (100), at least one stop means (1) can be moved in a transverse direction (102) which is perpendicular to the conveying direction (101) and parallel to the conveying plane (100) and the main part (2) has at least one displacement means (15) which extends in the transverse direction (102) and which is guided so as to be movable in the transverse direction (102) in a guide (16) of the main part (2), wherein the at least one stop means (1) is attached to the displacement means (15).

8. Device (10) according to Claim 7, wherein the displacement means (15) can be moved relative to the guide (16) by means of a servomotor (17) and/or linear motor, and/or wherein the displacement means (15) has a multiplicity of guide holes (18) arranged in a row in the transverse direction (102), wherein the stop means (1) which is embodied as a pin element (1') is guided axially in one of the guide holes (18), and/or wherein the main part (2) has at least one further displacement means (15), wherein the displacement means (15) and the further displacement means (15) are arranged on a common line parallel to the transverse direction (102), and can be displaced linearly independently of one another in the transverse direction (102), and/or wherein the actuator apparatus (3) has an actuator bar (17) which extends parallel to the displacement means (15) and can be moved by motor in the direction of the displacement means (15) in the perpendicular direction with respect to the conveying plane (100), in order to transfer the at least one stop means (1) from the rest position into the working position.

9. Device arrangement comprising at least two devices (10) according to one of the preceding claims, wherein the at least two devices (10) can be moved relative to one another in a plane parallel to the conveying plane (100), in particular by means of a cam drive (6).

10. Conveying apparatus (11), in particular roller conveyor, for moving transport goods (8) along a conveying path which has a multiplicity of rotatable support rollers (9) for receiving the transport goods (8), **characterized in that** the conveying apparatus (11) has a device (10) for stopping and/or aligning the transport goods (8) according to one of Claims 1 to 8.

11. Conveying apparatus (11) according to Claim 10, wherein the stop means (1) are each arranged in a plane parallel to the conveying plane (100), between two adjacent support rollers (9).

12. Conveying apparatus (11) according to Claim 11, wherein in the working position the stop means (1) are in a position in which they protrude beyond the support rollers (9) and into the conveying path, and wherein in the rest position the stop means (1) are arranged in a position in which they are retracted with respect to the conveying path wherein the conveying apparatus (11) has at least two devices (10) according to one of claims 1 to 8, wherein the at least two devices (10) can be moved relative to one another in a plane parallel to the conveying plane (100), in particular by means of a cam drive (6).

## Revendications

1. Dispositif (10) destiné à arrêter et/ou orienter des marchandises à transporter (8) sur un système de transport (11), en particulier un transporteur à rouleaux, et comprenant un corps de base (2) et un système d'arrêt mobile depuis le corps de base (2) jusque dans un chemin de transport du système de transport (11) et destiné à arrêter et/ou orienter les marchandises à transporter (8) transportées le long du chemin de transport, le système d'arrêt comprenant au moins deux moyens de butée (1) séparés, les moyens de butée (1) étant déplaçables en translation perpendiculairement à un plan de transport (100) du système de transporteur (11) entre la position de travail et la position de repos, le corps de base (2) comprenant au moins une plaque perforée (2'), les moyens de butée (1) comprenant chacun des éléments formant broche (1') qui sont guidés axialement dans des trous de l'au moins une plaque perforée (2') et la pluralité d'éléments formant broche (1') étant disposés dans un plan parallèle au plan de transport (100), **caractérisé en ce que** les moyens de butée (1) sont déplaçables conjointement au moyen d'un système d'actionnement (3) séparé entre une position de travail faisant saillie dans le plan de transport (100) et une position de repos escamotée par rapport au plan de transport (100), **en ce que** le système d'actionnement (3) comprend une pluralité de poussoirs (4) qui sont déplaçables en translation pour déplacer les éléments formant broche (1') perpendiculairement au plan de transport (100) et **en ce que** le corps de base (2), maintenant les moyens de butée (1), forment conjointement avec les moyen de butée (1) une unité de butée et le système d'actionnement (3) forme conjointement avec les poussoirs (4) une unité d'actionnement séparée de l'unité de butée, l'unité de butée et l'unité d'actionnement étant indépendantes l'une de l'autre et échangeables de manière modulaire.

2. Dispositif (10) selon la revendication 1, la pluralité d'éléments formant broche (1') étant disposée dans le plan parallèle au plan de transport (100) suivant une trame de points distribués de manière sensiblement uniforme.

3. Dispositif (10) selon la revendication 2, le système d'actionnement (3) comprenant une matrice à laquelle les poussoirs (4) sont fixés, le système d'actionnement (3) comprenant de préférence au moins une autre plaque perforée (3') qui est conçue sous la forme d'une matrice et qui peut être déplacée dans la direction du plan de transport (100) à l'aide d'un moyen d'entraînement (5).

4. Dispositif (10) selon la revendication 3, les poussoirs (4) étant fixés à l'autre plaque perforée (3') de manière amovible et librement configurable quant à leur position dans un plan parallèle au plan de transport (100) et/ou quant à leur position relative perpendiculairement au plan de transport (100).

5. Dispositif (10) selon l'une des revendications 3 ou 4,
le moyen d'entraînement (5) comprenant une came (5') qui peut tourner sur un arbre à cames (13) s'étendant parallèlement au plan de transport (100), la came (5') ayant de préférence une périphérie pourvue de pentes de courbe différentes et les différentes pentes de courbe étant de préférence destinées à commander les poussoirs (4) à différentes vitesses.

6. Dispositif (10) selon l'une des revendications précédentes, l'unité d'actionnement pouvant être retirée du dispositif (10) à la manière d'un tiroir parallèlement au plan de transport (100) afin d'échanger l'autre plaque perforée (3'), pourvue d'une configuration individuelle de poussoirs (4, 4').

7. Dispositif (10) selon l'une des revendications précédentes, au moins un moyen de butée (1) pouvant être déplacé le long d'une direction transversale (102) perpendiculaire à la direction de transport (101) et parallèle au plan de transport (100) afin d'orienter une marchandise de transport (8) dans le plan de transport (100) et le corps principal (2) comprenant au moins un moyen de coulissement (15) qui s'étend le long de la direction transversale (102) et qui est guidé de manière mobile le long de la direction transversale (102) dans un guide (16) du corps de base (2), l'au moins un moyen de butée (1) étant fixé au moyen de coulissement (15).

8. Dispositif (10) selon la revendication 7, le moyen de coulissement (15) pouvant être déplacé par rapport au guide (16) au moyen d'un servomoteur (17) et/ou d'un moteur linéaire et/ou le moyen de coulissement (15) comportant une pluralité de trous de guidage (18) rangés le long de la direction transversale (102), le moyen de butée (1) conçu comme un élément formant broche (1') étant guidé axialement dans l'un des trous de guidage (18) et/ou le corps de base (2) comportant au moins un autre moyen de coulissement (15), le moyen de déplacement (15) et l'autre moyen de coulissement (15) étant disposés sur une ligne commune parallèle à la direction transversale (102) et pouvant coulisser linéairement indépendamment l'un de l'autre le long de la direction transversale (102) et/ou
le dispositif d'actionnement (3) comportant une bande d'actionnement (17) qui s'étend parallèlement au moyen de coulissement (15) et qui peut être déplacée par moteur dans la direction du moyen de coulissement (15) pour transférer l'au moins un moyen de butée (1) de la position de repos à la position de travail le long de la direction perpendiculaire au plan de transport (100) .

9. Ensemble de dispositifs comprenant au moins deux dispositifs (10) selon l'une des revendications précédentes, les au moins deux dispositifs (10) pouvant être déplacés l'un par rapport à l'autre dans un plan parallèle au plan de transport (100), en particulier au moyen d'un entraînement à came (6).

10. Système de transport (11), en particulier transporteur à rouleaux, destiné à déplacer des marchandises à transporter (8) le long d'un chemin de transport et comportant une pluralité de rouleaux de support rotatifs (9) destinés à recevoir des marchandises à transporter (8), **caractérisé en ce que** le système de transport (11) comprend un dispositif (10) destiné à arrêter et/ou orienter les marchandises à transporter (8) selon l'une des revendications 1 à 8.

11. Système de transport (11) selon la revendication 10, les moyens de butée (1) étant disposés chacun dans un plan parallèle au plan de transport (100) entre deux rouleaux de support (9) adjacents.

12. Système de transport (11) selon la revendication 11, les moyens de butée (1) étant disposés, en position de travail, dans une position saillant dans le chemin de transport au-delà des rouleaux de support (9) et les moyens de butée (1) étant disposés, en position de repos, dans une position escamotée par rapport au chemin de transport, le système de transport (11) comprenant au moins deux dispositifs (10) selon l'une des revendications 1 à 8, les au moins deux dispositifs (10) pouvant être déplacés l'un par rapport à l'autre dans un plan parallèle au plan de transport (100), en particulier au moyen d'un entraînement à came (6).
